(19) **Europäisches Patentamt / European Patent Office / Office européen des brevets**

(11) **EP 4 722 565 A1**

(12) **EUROPEAN PATENT APPLICATION**
published in accordance with Art. 153(4) EPC

(43) Date of publication:
**08.04.2026 Bulletin 2026/15**

(21) Application number: **23938919.0**

(22) Date of filing: **31.05.2023**

(51) International Patent Classification (IPC):
**F16H 61/00** (2006.01)

(52) Cooperative Patent Classification (CPC):
**F16H 59/42; F16H 59/14; F16H 59/46; F16H 59/48; F16H 61/00;** F16H 2342/00; F16H 2710/22

(86) International application number:
**PCT/CN2023/097648**

(87) International publication number:
**WO 2024/243928 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
- **ZHEJIANG ZEEKR INTELLIGENT TECHNOLOGY CO., LTD.**
  **Ningbo, Zhejiang 315899 (CN)**
- **VIRIDI E-MOBILITY TECHNOLOGY (NINGBO) CO., LTD.**
  **Ningbo, Zhejiang 315336 (CN)**
- **Zhejiang Geely Holding Group Co., Ltd.**
  **Hangzhou, Zhejiang 310051 (CN)**

(72) Inventors:
- **SHEN, Keqing**
  **Hangzhou Bay New Zone Ningbo, Zhejiang 315336 (CN)**
- **CHEN, Dong**
  **Hangzhou Bay New Zone Ningbo, Zhejiang 315336 (CN)**
- **DONG, Qiao**
  **Hangzhou Bay New Zone Ningbo, Zhejiang 315336 (CN)**
- **XUE, Wenjie**
  **Hangzhou Bay New Zone Ningbo, Zhejiang 315336 (CN)**
- **MA, Yingguo**
  **Hangzhou Bay New Zone Ningbo, Zhejiang 315336 (CN)**
- **CHEN, Qimiao**
  **Hangzhou Bay New Zone Ningbo, Zhejiang 315336 (CN)**
- **LI, Changluo**
  **Hangzhou Bay New Zone Ningbo, Zhejiang 315336 (CN)**

(74) Representative: **Boult Wade Tennant LLP**
**Salisbury Square House**
**8 Salisbury Square**
**London EC4Y 8AP (GB)**

(54) **CONTROL METHOD AND DEVICE FOR CONTROLLED DEVICE, AND STORAGE MEDIUM**

(57) A control method and apparatus for a controlled apparatus, and a storage medium. The method includes: obtaining a corrected elastic coefficient of a moving component in a transmission apparatus and a driving force of a driving apparatus (step S201); determining, according to the corrected elastic coefficient and the driving force, a speed difference value between a first speed of the driving apparatus and a second speed of a controlled apparatus, and a rotational speed difference value between a first rotational speed of the driving apparatus and a second rotational speed of the controlled apparatus (step S202); determining a deformation amount of the transmission apparatus according to the speed difference value or the rotational speed difference value (step S203); obtaining the first speed and the first rotational speed, determining the second speed according to the first speed and the speed difference value, and determining the second rotational speed according to the first rotational speed and the rotational speed difference value (step S204); determining a transmission force of the transmission apparatus according to the corrected elastic coefficient and the deformation amount (step S205); and controlling the controlled apparatus to move according to at least one of the deformation amount, the speed difference value, the rotational speed difference value, the second speed, the second rotational speed and the transmission force (step S206). Precise control of the controlled apparatus is achieved.

EP 4 722 565 A1

Obtaining a corrected elastic coefficient of a moving component in a transmission apparatus and a driving force of a driving apparatus — S201

Determining, according to the corrected elastic coefficient and the driving force, a speed difference value between a first speed of the driving apparatus and a second speed of a controlled apparatus, and a rotational speed difference value between a first rotational speed of the driving apparatus and a second rotational speed of the controlled apparatus — S202

Determining a deformation amount of the transmission apparatus according to the speed difference value or the rotational speed difference value — S203

Obtaining the first speed and the first rotational speed, determining the second speed according to the first speed and the speed difference value, and determining the second rotational speed according to the first rotational speed and the rotational speed difference value — S204

Determining a transmission force of the transmission apparatus according to the corrected elastic coefficient and the deformation amount — S205

Controlling the controlled apparatus to move according to at least one of the deformation amount, the speed difference value, the rotational speed difference value, the second speed, the second rotational speed and the transmission force — S206

FIG. 2

## Description

### TECHNICAL FIELD

The present application relates to the field of power drive control, and in particular, to a control method and apparatus for a controlled apparatus, and a storage medium.

### BACKGROUND

In the field of power drive control, especially for the control of varying loading forces, since a transmission apparatus has elasticity, there is a delay in transmission apparatus time of a driving force from being output by a driving apparatus to being received by a controlled apparatus, so that the force received by the controlled apparatus under the varying loading forces is not completely equal to the driving force of the driving apparatus. At this time, there are some deviations between a speed of the driving apparatus and a speed of the controlled apparatus, and if these deviations are not compensated for, it will lead to low control accuracy and poor control effect of the controlled apparatus.

At present, in order to ensure accurate position control, force control and speed control of the controlled apparatus, the force transfer process, and the motion states of the driving apparatus and the controlled apparatus are usually measured one by one in the related art. However, in this manner, the measured variables still have a problem of low accuracy, and accurate control of the controlled apparatus still cannot be achieved.

### SUMMARY

The embodiments of the present application provide a control method and apparatus for a controlled apparatus, and a storage medium, so as to improve the accuracy of controlling the controlled apparatus.

According to a first aspect, an embodiment of the present application provides a control method for a controlled apparatus, including: obtaining a corrected elastic coefficient of a moving component in a transmission apparatus and a driving force of a driving apparatus; determining, according to the corrected elastic coefficient and the driving force, a speed difference value between a first speed of the driving apparatus and a second speed of the controlled apparatus, and a rotational speed difference value between a first rotational speed of the driving apparatus and a second rotational speed of the controlled apparatus; determining a deformation amount of the transmission apparatus according to the speed difference value or the rotational speed difference value; obtaining the first speed and the first rotational speed, determining the second speed according to the first speed and the speed difference value, and determining the second rotational speed according to the first rotational speed and the rotational speed difference value; determining a transmission force of the transmission apparatus according to the corrected elastic coefficient and the deformation amount; and controlling the controlled apparatus to move according to at least one of the deformation amount, the speed difference value, the rotational speed difference value, the second speed, the second rotational speed and the transmission force.

In a possible implementation, the obtaining the corrected elastic coefficient of the moving component in the transmission apparatus includes: obtaining a target speed ratio of the transmission apparatus at a preset gear stage and a target elastic coefficient of the transmission apparatus at the target speed ratio; and determining the corrected elastic coefficient according to the target speed ratio and the target elastic coefficient.

In a possible implementation, the determining, according to the corrected elastic coefficient and the driving force, the speed difference value between the first speed of the driving apparatus and the second speed of the controlled apparatus includes: obtaining a corrected mass of moving components in the driving apparatus and the transmission apparatus; and determining the speed difference value based on the corrected mass, the corrected elastic coefficient and the driving force.

In a possible implementation, the determining, according to the corrected elastic coefficient and the driving force, the rotational speed difference value between the first rotational speed of the driving apparatus and the second rotational speed of the controlled apparatus includes: obtaining a corrected rotational inertia of moving components in the driving apparatus and the transmission apparatus; and determining the rotational speed difference value based on the corrected rotational inertia, the corrected elastic coefficient and the driving force.

In a possible implementation, the determining the deformation amount of the transmission apparatus according to the speed difference value or the rotational speed difference value includes: determining a first integral value of the speed difference value and determining the first integral value as the deformation amount; or determining a second integral value of the rotational speed difference value and determining the second integral value as the deformation amount.

In a possible implementation, the determining the second speed according to the first speed and the speed difference value includes: determining a first difference value between the first speed and the speed difference value; and determining the second speed according to a third ratio of the first difference value to a total speed ratio of the transmission apparatus.

In a possible implementation, the determining the second rotational speed according to the first rotational speed and the rotational speed difference value includes: determining a second difference value between the first rotational speed and the rotational speed difference value; and determining the second rotational speed according to a fourth ratio of the second difference value to a total speed ratio of the transmission apparatus.

In a possible implementation, the determining the transmission force of the transmission apparatus according to the corrected elastic coefficient and the deformation amount includes: obtaining a third product of the corrected elastic coefficient and the deformation amount; and determining the transmission force according to the third product.

According to a second aspect, an embodiment of the present application provides a control apparatus for a controlled apparatus, including: a collection module, configured to obtain a corrected elastic coefficient of a moving component in a transmission apparatus and a driving force of a driving apparatus; a first determination module, configured to determine, according to the corrected elastic coefficient and the driving force, a speed difference value between a first speed of the driving apparatus and a second speed of the controlled apparatus, and a rotational speed difference value between a first rotational speed of the driving apparatus and a second rotational speed of the controlled apparatus; a second determination module, configured to determine a deformation amount of the transmission apparatus according to the speed difference value or the rotational speed difference value; a third determination module, configured to obtain the first speed and the first rotational speed, determine the second speed according to the first speed and the speed difference value, and determine the second rotational speed according to the first rotational speed and the rotational speed difference value; a fourth determination module, configured to determine a transmission force of the transmission apparatus according to the corrected elastic coefficient and the deformation amount; and a control module, configured to control the controlled apparatus to move according to at least one of the deformation amount, the speed difference value, the rotational speed difference value, the second speed, the second rotational speed and the transmission force.

According to a third aspect, an embodiment of the present application provides an electronic device, including: a processor and a memory connected to the processor; where the memory stores computer execution instructions; and the processor executes the computer execution instructions stored in the memory to implement the control method for the controlled apparatus according to the first aspect.

According to a fourth aspect, an embodiment of the present application provides a computer-readable storage medium, where the computer-readable storage medium stores computer execution instructions which, when being executed, are used to implement the control method for the controlled apparatus according to the first aspect.

According to a fifth aspect, an embodiment of the present application provides a computer program product, including a computer program which, when being executed, is used to implement the control method for the controlled apparatus according to the first aspect.

In the control method and apparatus for the controlled apparatus, and the storage medium provided in the embodiments of the present application, by obtaining the corrected elastic coefficient of the moving component in the transmission apparatus and the driving force of the driving apparatus, the speed difference value and the rotational speed difference value between the driving apparatus and the controlled apparatus can be obtained by calculation, so as to obtain the deformation amount of the transmission apparatus by calculation, obtain the speed and the rotational speed of the controlled apparatus by calculation, and determine the transmission force of the transmission apparatus. Since the corrected elastic coefficient of the moving component in the transmission apparatus and the driving force of the driving apparatus are both belong to values obtained through static measurement, the accuracy of the deformation amount, the speed, the rotational speed and the transmission force that are obtained by calculating in this manner will be higher than that of the values obtained by measurement. Therefore, the controlled apparatus is controlled according to at least one of the deformation amount, the speed difference value, the rotational speed difference value, the speed, the rotational speed and the transmission force that are obtained by calculation, which can improve the accuracy of controlling the controlled apparatus.

## BRIEF DESCRIPTION OF THE DRAWINGS

In order to illustrate the technical solutions in the embodiments of the present application or in the related art more clearly, a brief description will be given to the accompanying drawings required for the description of the embodiments or the related art. Obviously, the accompanying drawings in the following description are merely some embodiments of the present application, and for those ordinary skilled in the art, other drawings can also be obtained from these drawings without creative efforts.

FIG. 1 is a schematic structural diagram of a power-driven system according to an embodiment of the present application.

FIG. 2 is a flowchart of a control method for a controlled apparatus according to an embodiment of the present application.

FIG. 3 is a schematic curve diagram of a driving force of a driving apparatus according to an embodiment of the present application.

FIG. 4 is a schematic curve diagram of the comparison between a speed difference value obtained by measurement and a speed difference value obtained by calculation of a driving apparatus and a controlled apparatus according to an embodiment of the present application.

FIG. 5 is a schematic curve diagram of a deformation amount of a transmission apparatus according to an embodiment of the present application.

FIG. 6 is a schematic structural diagram of a control apparatus for a controlled apparatus according to an embodiment of the present application.

FIG. 7 is a block diagram illustrating an electronic device according to an exemplary embodiment.

## DESCRIPTION OF EMBODIMENTS

In order to make the objectives, technical solutions, and advantages of the embodiments of the present application clearer, the technical solutions in the embodiments of the present application will be clearly and completely described in the below with reference to the accompanying drawings in the embodiments of the present application. Obviously, the described embodiments are merely some rather than all of the embodiments of the present application. Based on the embodiments of the present application, all other embodiments made by those ordinary skilled in the art under the inspiration of these embodiments shall fall within the protection scope of the present application.

The terms such as "first", "second", "third" and "fourth" (if any) in the specification, the claims and the above-mentioned accompanying drawings of the present application are used to distinguish similar objects, and are not necessarily used to describe a specific sequence or order. It should be understood that the data used in this way can be interchanged in appropriate circumstances, so that the embodiments of the present application described herein can be implemented in orders other than those illustrated or described herein. In addition, the terms "include" and "have", as well as any variations thereof, are intended to cover a non-exclusive inclusion, such as processes, methods, systems, products, or devices that include a series of steps or units that are not necessarily limited to those clearly listed, but may include other steps or units that are not clearly listed or inherent to these processes, methods, products, or devices.

Firstly, the terms involved in the present application will be explained in the below.

Elastic coefficient: a ratio of a force exerted on an object to a deformation thereof.

Driving force: an output force of a driving apparatus.

Transmission force: an output force of a transmission apparatus, which equals the force received by a controlled apparatus.

Deformation amount of the transmission apparatus: a change amount of a relative position between the driving apparatus and the controlled apparatus.

In the related art provided in the background, at least the following technical problems exist:
Since various sensors are used to measure a force transmission process during the power drive control, the measurement cost is high, which has a great impact on the cost of the driving apparatus for large-scale production. The sensors need to be attached to various components, and therefore, the more sensors are used, the higher the arrangement requirement of the sensors, the higher the technical capability requirement for overall assembly design, and the longer the development cycle. During the force transmission process, the sensors have low accuracy in measuring the data of many dynamic moving components, making it impossible to accurately control the position, speed, or force magnitude of the controlled apparatus.

In response to the problems in the related art, the present application provides a control method for a controlled apparatus, by determining an elastic coefficient and a speed ratio of a moving component in a transmission apparatus, a corrected elastic coefficient of the moving component in the transmission apparatus can be determined with high accuracy, and a driving force of a driving apparatus can be obtained through sensor measurement or table look-up. Therefore, the accuracy of the driving force is high, and the accuracy of a speed difference value and a rotational speed difference value between the driving apparatus and the controlled apparatus obtained by calculating in this manner is high, therefore, the accuracy of the deformation amount of the transmission apparatus obtained by calculation is high, and the accuracy of the speed and the rotational speed of the controlled apparatus that are obtained by calculation is high, and the accuracy of the determined transmission force of the transmission apparatus is high. Therefore, the controlled apparatus is controlled according to at least one of the deformation amount, speed difference value, rotational speed difference value, speed, rotational speed and transmission force that are obtained by calculation, which can improve the accuracy of controlling the controlled apparatus, reduce the use of sensors, and further reduce costs.

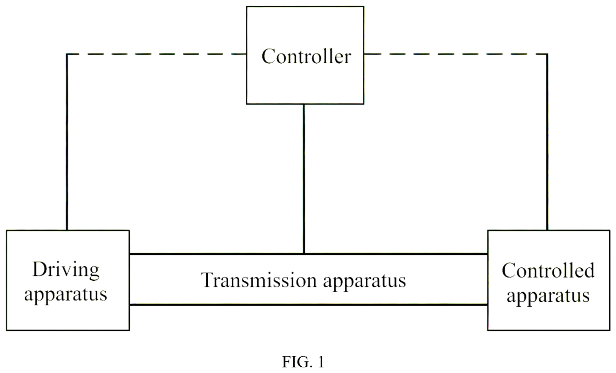

In one embodiment, the control method for the controlled apparatus can be applied in an application scenario. FIG. 1 is a schematic structural diagram of a power-driven system according to an embodiment of the present application. As shown in FIG. 1, the power-driven system may include a controller, a driving apparatus, a transmission apparatus, and a controlled apparatus. The controller can control the driving apparatus, the transmission apparatus and the controlled apparatus, and the transmission apparatus is connected to the driving apparatus and the controlled apparatus.

In the above-mentioned scenario, the driving apparatus is configured to generate power, that is, a driving force; the transmission apparatus is configured to transmit or interrupt the power, and a transmission force of the transmission apparatus is equal to a force received by the controlled apparatus; the controlled apparatus is configured to move under the action of the received force; and the controller is configured to control the driving apparatus and the transmission apparatus by receiving motion states and mechanical states of various moving components in the driving apparatus and the transmission apparatus, thereby achieving the control of the controlled apparatus.

Optionally, the motion state may include at least one of the following: speed, rotational speed, position, etc.; and the mechanical state may include at least one of the following: magnitude of force, direction of force, deformation amount of the transmission apparatus, speed ratio of the transmission apparatus, etc.

In the above-mentioned scenario, in the motion states and the mechanical states of various moving components in the driving apparatus and the transmission apparatus, the data that can be obtained through static measurement can be obtained through the sensors under static conditions, and other data can be obtained by calculating based on the data obtained by measurement, so that the accuracy of the obtained data can be improved, thereby improving the accuracy of controlling the controlled apparatus.

With reference to the above-mentioned scenario, the technical solution of the control method for the controlled apparatus provided in the present application will be described in detail in the below through several specific embodiments.

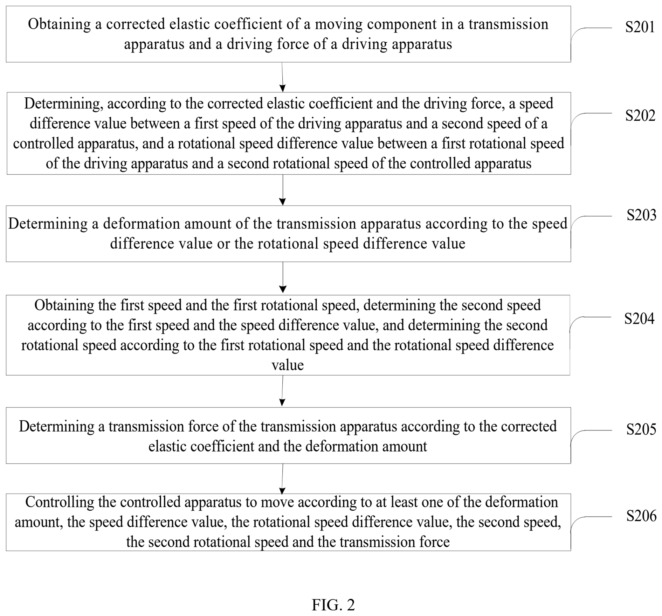

The present application provides a control method for a controlled apparatus. FIG. 2 is a flowchart of the control method for the controlled apparatus according to an embodiment of the present application. As shown in FIG. 2, the method includes the following steps.

S201: obtaining a corrected elastic coefficient of a moving component in a transmission apparatus and a driving force of a driving apparatus.

In this step, the moving component can be one or more of a tooth, a rod, a shaft, a wheel, a belt, a key, etc., that is, one of the tooth, the rod, the shaft, the wheel, the belt, the key, etc. independently transmits the driving force, or multiple of them transmit the driving force simultaneously in series or in parallel. The driving apparatus may also be referred to as a power source. The driving apparatus can be one or more of a fuel machine, a steam machine, an electric motor, a piston, etc., that is, one of the fuel machine, the steam machine, the electric motor, a piston, etc., separately provides the driving force, or multiple of them provide the driving force simultaneously. The driving force can be a longitudinal force and/or a rotational force, where the longitudinal force can be one or more of a pressure, a thrust force, a pulling force, etc., and the rotational force can be a torque and/or a torsion force.

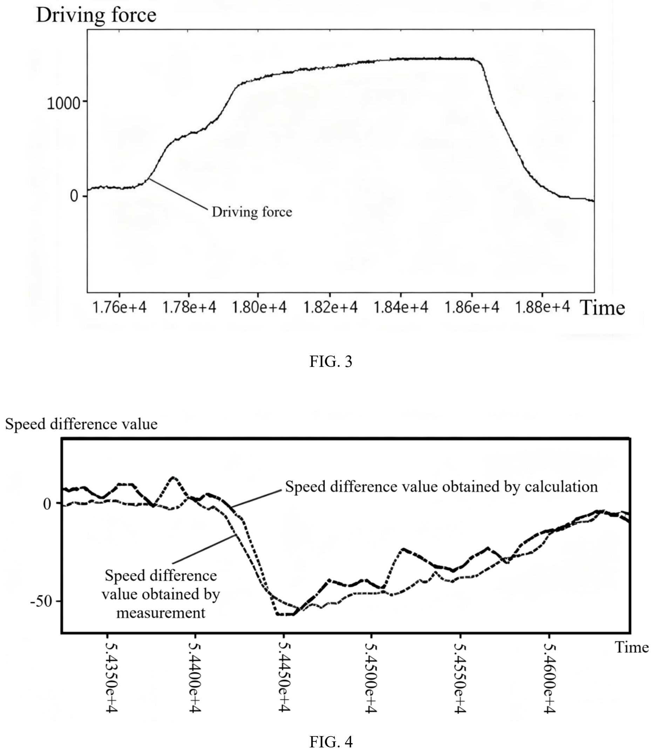

Optionally, the corrected elastic coefficient can be obtained by calculation, the driving force can be obtained by measurement or controlling a program to perform table look-up, and the driving force of the driving apparatus can be equal to an output force of the driving apparatus. Therefore, the accuracy of the corrected elastic coefficient and the driving force will be high. The curve diagram of the driving force of the driving apparatus can be as shown in FIG. 3. FIG. 3 is a schematic curve diagram of the driving force of the driving apparatus according to an embodiment of the present application.

S202: determining, according to the corrected elastic coefficient and the driving force, a speed difference value between a first speed of the driving apparatus and a second speed of a controlled apparatus, and a rotational speed difference value between a first rotational speed of the driving apparatus and a second rotational speed of the controlled apparatus.

In this step, the first speed of the driving apparatus and the second speed of the controlled apparatus may indicate that the controlled apparatus moves linearly, and the first rotational speed of the driving apparatus and the second rotational speed of the controlled apparatus may indicate that the controlled apparatus moves circumferentially. Through the high-accuracy corrected elastic coefficient and the high-accuracy driving force, the high-accuracy speed difference value and the high-accuracy rotational speed difference value between the driving apparatus and the controlled apparatus can be determined, thereby determining the high-accuracy speed or rotational speed of the controlled apparatus and the high-accuracy deformation amount of the controlled apparatus, so as to control the controlled apparatus with high accuracy.

S203: determining a deformation amount of the transmission apparatus according to the speed difference value or the rotational speed difference value.

In this step, the deformation amount of the transmission apparatus can represent a relative position between the driving apparatus and the controlled apparatus. When the controlled apparatus moves linearly, the relative position can be determined by the speed difference value between the driving apparatus and the controlled apparatus; and when the controlled apparatus moves circumferentially, the relative position can be determined by the rotational speed difference value between the driving apparatus and the controlled apparatus.

S204: obtaining the first speed and the first rotational speed, determining the second speed according to the first speed and the speed difference value, and determining the second rotational speed according to the first rotational speed and the rotational speed difference value.

In this step, the first speed and the first rotational speed of the driving apparatus can be measured by the sensors.

However, if the second speed and the second speed of the controlled apparatus are measured by the sensors, it will increase the measurement cost, and the second speed can be determined through the first speed and the speed difference value having high accuracy; and the second rotational speed can be determined according to the first rotational speed and the rotational speed difference value, so as to control the controlled apparatus with high accuracy.

S205: determining a transmission force of the transmission apparatus according to the corrected elastic coefficient and the deformation amount.

In this step, an output force of the transmission apparatus is equal to the transmission force of the transmission apparatus, and since there is a loss in an input force of the transmission apparatus during the transmission process, the input force of the transmission apparatus is not equal to the output force of the transmission apparatus, that is, the input force of the transmission apparatus is not equal to the transmission force of the transmission apparatus. Therefore, the transmission force of the transmission apparatus can be determined by the corrected elastic coefficient of the moving component in the transmission apparatus and the deformation amount of the transmission apparatus.

S206: controlling the controlled apparatus to move according to at least one of the deformation amount, the speed difference value, the rotational speed difference value, the second speed, the second rotational speed and the transmission force.

In this step, the controlled apparatus can be controlled to perform a linear motion or a circular motion by using at least one of the deformation amount, the speed difference value, the rotational speed difference value, the second speed, the second rotational speed, and the transmission force.

According to the control method for the controlled apparatus provided in the this embodiment, by obtaining the corrected elastic coefficient of the moving component in the transmission apparatus and the driving force of the driving apparatus, the speed difference value and the rotational speed difference value between the driving apparatus and the controlled apparatus can be obtained by calculation, so as to obtain the deformation amount of the transmission apparatus by calculation, obtain the speed and the rotational speed of the controlled apparatus by calculation, and determine the transmission force of the transmission apparatus. Since the corrected elastic coefficient of the moving component in the transmission apparatus and the driving force of the driving apparatus are both belong to values obtained through static measurement, the accuracy of the deformation amount, the speed, the rotational speed and the transmission force that are obtained by calculating in this manner will be higher than that of the values obtained by measurement. Therefore, the controlled apparatus is controlled according to at least one of the deformation amount, the speed difference value, the rotational speed difference value, the speed, the rotational speed and the transmission force that are obtained by calculation, which can improve the accuracy of controlling the controlled apparatus.

In one embodiment, the obtaining the corrected elastic coefficient of the moving component in the transmission apparatus includes: obtaining a target speed ratio of the transmission apparatus at a preset gear stage and a target elastic coefficient of the transmission apparatus at the target speed ratio; and determining the corrected elastic coefficient according to the target speed ratio and the target elastic coefficient.

In this solution, with regard to the transmission apparatus with multi-stage gears, its elastic coefficient is the corrected elastic coefficient, that is, an intermediate deformation process is ignored, and the calculation is only performed on the total deformation amount between an input stage and an output stage of the transmission apparatus. The calculation formula can be as follows:

$$K = K_1 * i_1 + K_2 * i_2 \ldots + K_n * i_n$$

where, $i_n$ may indicate the target speed ratio at the preset gear stage; $K_n$ may indicate the target elastic coefficient at the target speed ratio; K can be expressed as the corrected elastic coefficient. Since $i_n$ and $K_n$ are data that can be measured under static conditions or obtained through table lookup, calculating the corrected elastic coefficient through the above formula can improve the accuracy of the corrected elastic coefficient.

Optionally, the high-accuracy driving force and the high-accuracy deformation amount can be obtained through measurement under static conditions, and a corresponding relationship between the driving force and the deformation amount, such as a ratio between the driving force and the deformation amount, can be determined, so as to obtain the corrected elastic coefficient.

Optionally, the corrected elastic coefficient may also be calibrated through curve fitting.

In one embodiment, the determining, according to the corrected elastic coefficient and the driving force, the speed difference value between the first speed of the driving apparatus and the second speed of the controlled apparatus includes: obtaining a corrected mass of the moving components in the driving apparatus and the transmission apparatus; determining the speed difference value based on the corrected mass, the corrected elastic coefficient and the driving force.

In this solution, with regard to the driving apparatus and the transmission apparatus with multi-stage gears, a mass of moving components thereof is the corrected mass, that is, the related components in the transmission apparatus are considered as lightweight springs to participate in the calculation during the calculation process. The corrected mass can be obtained through measurement under static conditions, and the mass of the moving component in the transmission apparatus and the mass of the moving component in the driving apparatus are corrected and then participate in the calculation. The calculation formula of the corrected mass can be as follows:

$$M = M_1/i_1 + M_2/i_2 \ldots + M_n/i_n$$

where, $i_n$ may indicate the speed ratio at a corresponding stage; $M_n$ may indicate masses of the moving components in the transmission apparatus and the driving apparatus at a corresponding speed ratio; and M may indicate the corrected mass.

Specifically, after the corrected mass is obtained, the speed difference value can be determined through the following formula:

$$F_{drive} - K * \int \Delta V = M * \Delta V$$

where, $F_{drive}$ may indicate the driving force, K may indicate the corrected elastic coefficient, $\Delta V$ may indicate the speed difference value, and M may indicate the corrected mass. Through the high-accuracy corrected elastic coefficient and the high-accuracy driving force, the high-accuracy speed difference value between the driving apparatus and the controlled apparatus can be determined, thereby determining the high-accuracy speed of the controlled apparatus and the high-accuracy deformation amount of the controlled apparatus, so as to control the controlled apparatus with high accuracy.

Optionally, the corrected mass may also be obtained by a relationship between the driving force and the acceleration, or be calibrated through curve fitting.

Optionally, the curve comparison of the speed difference value obtained by measurement with the speed difference value obtained by calculation between the driving apparatus and the controlled apparatus can be as shown in the FIG. 4. FIG. 4 is a schematic curve diagram of the comparison between a speed difference value obtained by measurement and a speed difference value obtained by calculation of a driving apparatus and a controlled apparatus according to an embodiment of the present application. As can be seen from FIG. 4, the speed difference value obtained by calculation is compared with the speed difference value obtained by measurement, it can be determined that the speed difference value obtained by calculation has better accuracy, and thus the force situation of the controlled apparatus, that is, the transmission force of the transmission apparatus, can be calculated accurately.

In one embodiment, the determining, according to the corrected elastic coefficient and the driving force, the rotational speed difference value between the first rotational speed of the driving apparatus and the second rotational speed of the controlled apparatus includes: obtaining a corrected rotational inertia of the moving components in the driving apparatus and the transmission apparatus; determining the rotational speed difference value based on the corrected rotational inertia, the corrected elastic coefficient and the driving force.

In this solution, with regard to the driving apparatus and the transmission apparatus with multi-stage gears, a rotational inertia of a moving component thereof is the corrected rotational inertia, that is, related components of the transmission apparatus are considered as lightweight springs to be involved in the calculation during the calculation process. The corrected rotational inertia can be obtained through measurement under static conditions. The rotational inertia of the moving component in the transmission apparatus and the rotational inertia of the moving component in the driving apparatus are corrected to participate in the calculation. The calculation formula of the corrected rotational inertia can be as follows:

$$I = I_1/i_1 + I_2/i_2 . . + I_n/i_n$$

where, $i_n$ may indicate the speed ratio at a corresponding stage; $I_n$ may indicate the rotational inertias of the moving components in the transmission apparatus and the driving apparatus at the corresponding speed ratio; and I may indicate the corrected rotational inertia.

Specifically, after the corrected rotational inertia is obtained, the rotational speed difference value can be determined through the following formula:

$$F_{drive} - K * \int \Delta\omega = I * \Delta\omega$$

where, $F_{drive}$ may indicate the driving force, K may indicate the corrected elastic coefficient, $\Delta\omega$ may indicate the rotational speed difference value, and I may indicate the corrected rotational inertia. Through the high-accuracy corrected elastic coefficient and the high-accuracy driving force, the high-accuracy rotational speed difference value between the driving apparatus and the controlled apparatus can be determined, thereby determining the high-accuracy rotational speed of the controlled apparatus and the high-accuracy deformation amount of the controlled apparatus, so as to control the controlled apparatus with high accuracy.

Optionally, the corrected rotational inertia may also be obtained by a relationship between the driving force and the acceleration, or be calibrated through curve fitting.

In one embodiment, the determining the deformation amount of the transmission apparatus according to the speed difference value or the rotational speed difference value includes: determining a first integral value of the speed difference value and determining the first integral value as the deformation amount; or determining a second integral value of the rotational speed difference value and determining the second integral value as the deformation amount.

In this solution, when the controlled apparatus moves linearly, the deformation amount of the transmission apparatus can be determined through the speed difference value, and the calculation formula can be as follows:

$$L = \int \Delta V$$

where L may indicate the deformation amount, $\Delta V$ may indicate the speed difference value, and $\int$ may indicate the integral operation.

When the controlled apparatus moves circumferentially, the deformation amount of the transmission apparatus can be determined by the rotational speed difference value, and the calculation formula can be as follows:

$$L = \int \Delta \omega$$

where L may indicate the deformation amount, $\Delta \omega$ may indicate the rotational speed difference value, and $\int$ may indicate the integral operation.

Optionally, the high-accuracy speed difference value and the high-accuracy rotational speed difference value can be integrated to obtain the high-accuracy deformation amount, so as to control the controlled apparatus with high accuracy.

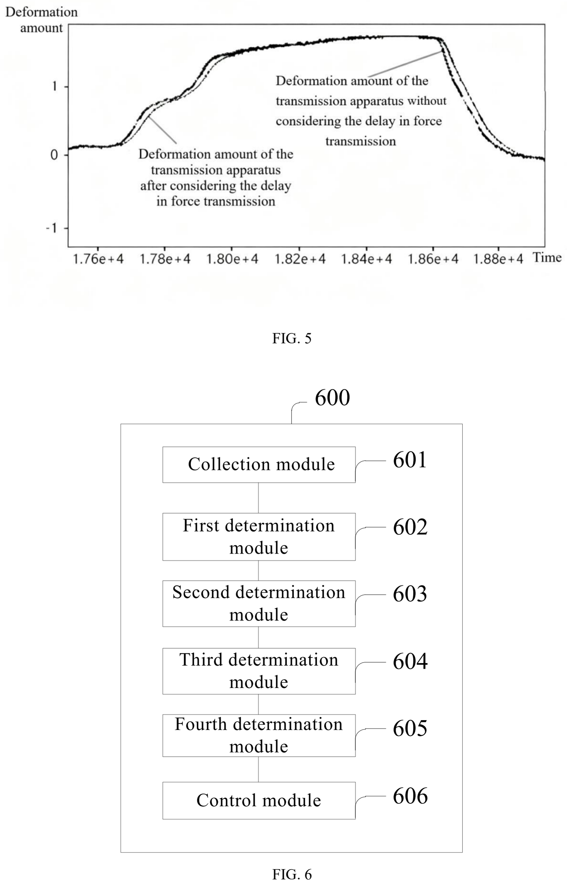

Optionally, the deformation amount calculated from the speed difference value or the rotational speed difference value is a deformation amount of the transmission apparatus after considering the delay in force transmission. A curve diagram of the deformation amount of the transmission apparatus can be as shown in FIG. 5. FIG. 5 is a schematic curve diagram of the deformation amount of the transmission apparatus according to an embodiment of the present application. It can be seen from FIG. 5 that, under the action of the driving force shown in FIG. 3, compared with the deformation amount of the transmission apparatus without considering the delay in force transmission, the deformation amount of the transmission apparatus after considering the delay in force transmission can more accurately reflect the relative motion state of the driving apparatus and the controlled apparatus.

In one embodiment, the determining the second speed according to the first speed and the speed difference value includes: determining a first difference value between the first speed and the speed difference value; and determining the second speed based on a third ratio of the first difference value to a total speed ratio of the transmission apparatus.

In this solution, the first speed can be obtained through sensor measurement or calculation, and therefore, the accuracy of the first speed is high. The first speed, the speed difference value, and the second speed satisfy the following formula:

$$\Delta V = V_{drive} - V_{output} * i$$

where, $\Delta V$ may indicate the speed difference value, $V_{drive}$ may indicate the first speed of the driving apparatus, $V_{output}$ may indicate the second speed of the controlled apparatus, i may indicate the total speed ratio of the transmission apparatus. Through the high-accuracy first speed and the high-accuracy speed difference value, the high-accuracy second speed can be obtained, avoiding measuring the second speed with a sensor, thereby saving costs and controlling the controlled apparatus with high accuracy.

Optionally, the second speed of the controlled apparatus may also be obtained through sensor measurement or calculation, and the first speed can be obtained by calculating through the above-mentioned formula satisfied by the first speed, the speed difference value, and the second speed.

In one embodiment, the determining the second rotational speed according to the first rotational speed and the rotational speed difference value includes: determining a second difference value between the first rotational speed and the rotational speed difference value; and determining the second rotational speed according to a fourth ratio of the second difference value to a total speed ratio of the transmission apparatus.

In this solution, the first rotational speed can be obtained through sensor measurement or calculation, and therefore, the accuracy of the first rotational speed is high. The first rotational speed, the rotational speed difference value and the second rotational speed satisfy the following formula:

$$\Delta\omega = \omega_{drive} - \omega_{output} *i$$

where, $\Delta\omega$ may indicate the rotational speed difference value, $\omega_{drive}$ may indicate the first rotational speed of the driving apparatus, $\omega_{output}$ may indicate the second rotational speed of the controlled apparatus, i may indicate the total speed ratio of the transmission apparatus. Through the high-accuracy first rotational speed and the high-accuracy rotational speed difference value, the high-accuracy second rotational speed can be obtained, avoiding measuring the second rotational speed with a sensor, thereby saving costs and controlling the controlled apparatus with high accuracy.

Optionally, the second rotational speed of the controlled apparatus may also be obtained through sensor measurement or calculation, and the first rotational speed can be obtained by calculating through the above-mentioned formula satisfied by the first rotational speed, the rotational speed difference value, and the second rotational speed.

In one embodiment, the determining the transmission force of the transmission apparatus according to the corrected elastic coefficient and the deformation amount includes: obtaining a third product of the corrected elastic coefficient and the deformation amount; and determining the transmission force according to the third product.

In this solution, the transmission apparatus serves as an ideal elastic medium, and when the mass or the rotational inertia thereof are ignored, the magnitude of the transmission force thereof is only related to deformation thereof, and its transmission force, input force, and output force are equal in magnitude.

Optionally, the transmission force of the transmission apparatus, the input force of the transmission apparatus, the output force of the transmission apparatus, the deformation amount of the transmission apparatus, and the speed ratio of the transmission apparatus may satisfy the following equation (ideally):

$$K*L = F_{input} *i = F_{transmission} + \Delta F, \quad F_{transmission} = F_{output}$$

Or

$$K*L = T_{input} i = T_{transmission} + \Delta T, \quad T_{transmission} = T_{output}$$

where, K may indicate the corrected elastic coefficient; L may indicate the deformation amount of the transmission apparatus; i may indicate the total speed ratio of the transmission apparatus; $F_{input}$ may indicate an input longitudinal force of the transmission apparatus; $F_{transmission}$ may indicate the transmission force of the transmission apparatus; $F_{output}$ may indicate an output force of the transmission apparatus; $T_{input}$ may indicate an input torque of the transmission apparatus; the $T_{transmission}$ may indicate a transmission torque of the transmission apparatus; $T_{output}$ may indicate an output torque of the transmission apparatus; $\Delta F$ may indicate the delayed transmission force; and $\Delta T$ may indicate the delayed transmission torque.

The output force of the driving apparatus is equal to the input force of the transmission apparatus, and the output force of the transmission apparatus is equal to the transmission force of the transmission apparatus, which is equal to the force received by the controlled apparatus. By determining the high-accuracy transmission force, the controlled apparatus can be controlled with high accuracy.

Optionally, according to different calculation methods, the corresponding relationships between the input force, the speed ratio and the transmission force (i.e., output force) can be different, and the same calculation method may exist in subsequent calculations.

Optionally, after determining the transmission force, the difference value between the driving force and the transmission force can be determined by the following formula:

$$\Delta F = F_{drive} *i - F_{transmission} \text{ or } \Delta T = T_{drive} *i - T_{transmission}$$

where, $\Delta F$ may indicate the difference value between the driving force and the transmission force, $T_{drive}$ may indicate a driving torque of the driving apparatus, and $\Delta T$ may indicate a difference value between the driving torque of the driving apparatus and the transmission torque of the transmission apparatus. Through $\Delta F$ and/or $\Delta T$, it is also possible to control the controlled apparatus with high accuracy.

In one embodiment, the deformation amount, the second speed, the second rotational speed, the transmission force, the speed difference value and the rotational speed difference value can be output, so that the controller or the control program may accurately control the movement of the controlled apparatus according to one or more of the deformation amount, the second speed, the second rotational speed, the transmission force, the speed difference value and the rotational speed difference value.

In the control method for the controlled apparatus provided in the present application, by obtaining the corrected elastic coefficient of the moving component in the transmission apparatus, the masses or the rotational inertias of the moving components in the transmission apparatus and the driving apparatus, and the driving force of the driving apparatus, the deformation amount of the transmission apparatus, the magnitude of the transmission force of the transmission apparatus, and the magnitude of the force received by the controlled apparatus can be calculated, so that the speed difference value or the rotational speed difference value between the driving apparatus and the controlled apparatus can be obtained, and the speed and the rotational speed of the controlled apparatus and the accurate position of the controlled apparatus can be further obtained, so as to help the controller or the control program to accurately drive and control the controlled apparatus and meanwhile reduce the use of sensors, thereby further saving development costs and development cycles.

The present application also provides a control apparatus for a controlled apparatus. FIG. 6 is a schematic structural diagram of a control apparatus for a controlled apparatus according to an embodiment of the present application. As shown in FIG. 6, the control apparatus 600 of the controlled apparatus includes:

a collection module 601, configured to obtain a corrected elastic coefficient of a moving component in a transmission apparatus and a driving force of a driving apparatus;

a first determination module 602, configured to determine, according to the corrected elastic coefficient and the driving force, a speed difference value between a first speed of the driving apparatus and a second speed of the controlled apparatus, and a rotational speed difference value between a first rotational speed of the driving apparatus and a second rotational speed of the controlled apparatus;

a second determination module 603, configured to determine a deformation amount of the transmission apparatus according to the speed difference value or the rotational speed difference value;

a third determination module 604, configured to obtain the first speed and the first rotational speed, determine the second speed according to the first speed and the speed difference value, and determine the second rotational speed according to the first rotational speed and the rotational speed difference value;

a fourth determination module 605, configured to determine a transmission force of the transmission apparatus according to the corrected elastic coefficient and the deformation amount; and

a control module 606, configured to control the controlled apparatus to move according to at least one of the deformation amount, the speed difference value, the rotational speed difference value, the second speed, the second rotational speed and the transmission force.

Optionally, when obtaining the corrected elastic coefficient of the moving component in the transmission apparatus, the collection module 601 is specifically configured to: obtain a target speed ratio of the transmission apparatus at a preset gear stage and a target elastic coefficient of the transmission apparatus at the target speed ratio; and determine the corrected elastic coefficient according to the target speed ratio and the target elastic coefficient.

Optionally, when determining, according to the corrected elastic coefficient and the driving force, the speed difference value between the first speed of the driving apparatus and the second speed of the controlled apparatus, the third determination module 604 is specifically configured to: obtain a corrected mass of the moving components in the driving apparatus and the transmission apparatus; and determine the speed difference value based on the corrected mass, the corrected elastic coefficient and the driving force.

Optionally, when determining, according to the corrected elastic coefficient and the driving force, the rotational speed difference value between the first rotational speed of the driving apparatus and the second rotational speed of the controlled apparatus, the third determination module 604 is specifically configured to: obtain a corrected rotational inertia of the moving components in the driving apparatus and the transmission apparatus; and determine the rotational speed difference value based on the corrected rotational inertia, the corrected elastic coefficient and the driving force.

Optionally, when determining the deformation amount of the transmission apparatus according to the speed difference value or the rotational speed difference value, the second determination module 603 is specifically configured to: determine a first integral value of the speed difference value and determine the first integral value as the deformation amount; or determine a second integral value of the rotational speed difference value and determine the second integral value as the deformation amount.

Optionally, when determining the second speed according to the first speed and the speed difference value, the third determination module 604 is specifically configured to: determine a first difference value between the first speed and the speed difference value; and determine the second speed according to a third ratio of the first difference value to a total speed ratio of the transmission apparatus.

Optionally, when determining the second rotational speed according to the first rotational speed and the rotational speed difference value, the third determination module 604 is specifically configured to: determine a second difference value between the first rotational speed and the rotational speed difference value; and determine the second rotational speed according to a fourth ratio of the second difference value to a total speed ratio of the transmission apparatus.

Optionally, when determining the transmission force of the transmission apparatus according to the corrected elastic coefficient and the deformation amount, the fourth determination module 605 is specifically configured to: obtain a third product of the corrected elastic coefficient and the deformation amount; and determine the transmission force according to the third product.

The control apparatus for the controlled apparatus provided in this embodiment is configured to implement the technical solution of the control method for the controlled apparatus in the above-mentioned method embodiments. The implementation principle and technical effect thereof are similar, and will not be repeated herein.

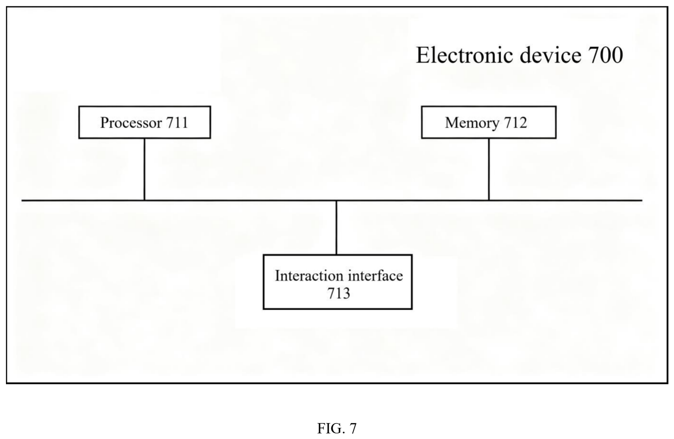

An embodiment of the present application further provides an electronic device. FIG. 7 is a block diagram of an electronic device according to an exemplary embodiment. As shown in FIG. 7, the electronic device 700 includes:

a processor 711, a memory 712, and an interaction interface 713; where
the processor 711 is connected to the memory 712 and the interaction interface 713, the memory 712 is configured to store computer execution instructions that are executable by the processor 711; the processor 711 is configured to implement the technical solution of the control method for the controlled apparatus as mentioned above by executing the computer executable instructions; and the interaction interface 713 provides an interface between the processor 711 and a peripheral interface module.

Optionally, the memory 712 can be independent or integrated with the processor 711.

Optionally, when the memory 712 is a component independent of the processor 711, the electronic device 700 can further include a bus configured to connect the components mentioned above.

Optionally, the memory can be, but is not limited to, a random access memory (Random Access Memory, RAM for short), a read only memory (Read Only Memory, ROM for short), a programmable read-only memory (Programmable Read-Only Memory, PROM for short), an erasable read-only memory (Erasable Programmable Read-Only Memory, EPROM for short), an electric erasable read-only memory (Electric Erasable Programmable Read-Only Memory, EEPROM for short), etc. The memory is configured to store a program, and the processor executes the program after receiving execution instructions. Furthermore, the software programs and modules in the above-mentioned memory can further include an operating system, which can include various software components and/or drivers for managing system tasks (e.g. memory management, storage device control, power supply management, etc. ), and can communicate with various hardware or software components to provide an operating environment for other software components.

Optionally, the processor can be an integrated circuit chip and has a signal processing capability. The processor can be a general-purpose processor, including a central processing unit (Central Processing Unit, CPU for short), a network processor (Network Processor, NP for short), etc., which can implement or execute the disclosed methods, steps, and logical diagrams disclosed in the embodiments of the present application. The general-purpose processor can be a microprocessor, or the processor may also be any conventional processor.

An embodiment of the present application provides a computer-readable storage medium, where the computer-readable storage medium stores computer execution instructions which, when being executed, are used to implement the technical solution of the control method for the controlled apparatus provided in the above-mentioned method embodiments.

An embodiment of the present application further provides a computer program product, including a computer program which, when being executed, is used to implement the technical solution of the control method for the controlled apparatus provided in the method embodiments.

Those ordinary skilled in the art can understand that all or part of the steps of each method embodiment can be implemented by hardware related to program instructions. The above-mentioned program can be stored in a computer readable storage medium. When the program is executed, steps including the above-mentioned method embodiments are performed. The above-mentioned storage medium can be any medium that can store program codes, such as a ROM, a RAM, a magnetic disk, or an optical disk.

Finally, it should be noted that the above-mentioned embodiments are merely used to illustrate the technical solution of the present application rather than to limit the present application. Although the present application is described in detail with reference to the above-mentioned embodiments, those ordinary skilled in the art should understand that they may still make modifications to the technical solutions described in the above-mentioned embodiments, or make equivalent replacements to some or all technical features thereof, and these modifications or replacements do not make the essence of the corresponding technical solutions depart from the scope of the technical solutions of the embodiments of the present application.

**Claims**

1. A control method for a controlled apparatus, comprising:

obtaining a corrected elastic coefficient of a moving component in a transmission apparatus and a driving force of a driving apparatus;

determining, according to the corrected elastic coefficient and the driving force, a speed difference value between a first speed of the driving apparatus and a second speed of the controlled apparatus, and a rotational speed difference value between a first rotational speed of the driving apparatus and a second rotational speed of the controlled apparatus;

determining a deformation amount of the transmission apparatus according to the speed difference value or the rotational speed difference value;

obtaining the first speed and the first rotational speed, determining the second speed according to the first speed and the speed difference value, and determining the second rotational speed according to the first rotational speed and the rotational speed difference value;

determining a transmission force of the transmission apparatus according to the corrected elastic coefficient and the deformation amount; and

controlling the controlled apparatus to move according to at least one of the deformation amount, the speed difference value, the rotational speed difference value, the second speed, the second rotational speed and the transmission force.

2. The control method according to claim 1, wherein the obtaining the corrected elastic coefficient of the moving component in the transmission apparatus comprises:

obtaining a target speed ratio of the transmission apparatus at a preset gear stage and a target elastic coefficient of the transmission apparatus at the target speed ratio; and

determining the corrected elastic coefficient according to the target speed ratio and the target elastic coefficient.

3. The control method according to claim 2, wherein the determining, according to the corrected elastic coefficient and the driving force, the speed difference value between the first speed of the driving apparatus and the second speed of the controlled apparatus comprises:

obtaining a corrected mass of moving components in the driving apparatus and the transmission apparatus; and

determining the speed difference value based on the corrected mass, the corrected elastic coefficient and the driving force.

4. The control method according to claim 2, wherein the determining, according to the corrected elastic coefficient and the driving force, the rotational speed difference value between the first rotational speed of the driving apparatus and the second rotational speed of the controlled apparatus comprises:

obtaining a corrected rotational inertia of moving components in the driving apparatus and the transmission apparatus; and

determining the rotational speed difference value based on the corrected rotational inertia, the corrected elastic coefficient and the driving force.

5. The control method according to any one of claims 1 to 4, wherein the determining the deformation amount of the transmission apparatus according to the speed difference value or the rotational speed difference value comprises:

determining a first integral value of the speed difference value and determining the first integral value as the deformation amount; or

determining a second integral value of the rotational speed difference value and determining the second integral value as the deformation amount.

6. The control method according to any one of claims 1 to 4, wherein the determining the second speed according to the first speed and the speed difference value comprises:

determining a first difference value between the first speed and the speed difference value; and

determining the second speed according to a third ratio of the first difference value to a total speed ratio of the transmission apparatus.

7. The control method according to any one of claims 1 to 4, wherein the determining the second rotational speed according to the first rotational speed and the rotational speed difference value comprises:

determining a second difference value between the first rotational speed and the rotational speed difference value; and

determining the second rotational speed according to a fourth ratio of the second difference value to a total speed ratio of the transmission apparatus.

8. The control method according to any one of claims 1 to 4, wherein the determining the transmission force of the transmission apparatus according to the corrected elastic coefficient and the deformation amount comprises:

obtaining a third product of the corrected elastic coefficient and the deformation amount; and
determining the transmission force according to the third product.

9. A control apparatus for a controlled apparatus, comprising:

a collection module, configured to obtain a corrected elastic coefficient of a moving component in a transmission apparatus and a driving force of a driving apparatus;
a first determination module, configured to determine, according to the corrected elastic coefficient and the driving force, a speed difference value between a first speed of the driving apparatus and a second speed of the controlled apparatus, and a rotational speed difference value between a first rotational speed of the driving apparatus and a second rotational speed of the controlled apparatus;
a second determination module, configured to determine a deformation amount of the transmission apparatus according to the speed difference value or the rotational speed difference value;
a third determination module, configured to obtain the first speed and the first rotational speed, determine the second speed according to the first speed and the speed difference value, and determine the second rotational speed according to the first rotational speed and the rotational speed difference value;
a fourth determination module, configured to determine a transmission force of the transmission apparatus according to the corrected elastic coefficient and the deformation amount; and
a control module, configured to control the controlled apparatus to move according to at least one of the deformation amount, the speed difference value, the rotational speed difference value, the second speed, the second rotational speed and the transmission force.

10. An electronic device, comprising: a processor and a memory connected to the processor; wherein

the memory stores computer execution instructions; and
the processor executes the computer execution instructions stored in the memory, to implement the control method for the controlled apparatus according to any one of claims 1 to 8.

11. A computer-readable storage medium, wherein the computer-readable storage medium stores computer execution instructions which, when being executed, are used to implement the control method for the controlled apparatus according to any one of claims 1 to 8.

12. A computer program product, comprising a computer program which, when being executed, is used to implement the control method for the controlled apparatus according to any one of claims 1 to 8.

FIG. 1

Obtaining a corrected elastic coefficient of a moving component in a transmission apparatus and a driving force of a driving apparatus — S201

Determining, according to the corrected elastic coefficient and the driving force, a speed difference value between a first speed of the driving apparatus and a second speed of a controlled apparatus, and a rotational speed difference value between a first rotational speed of the driving apparatus and a second rotational speed of the controlled apparatus — S202

Determining a deformation amount of the transmission apparatus according to the speed difference value or the rotational speed difference value — S203

Obtaining the first speed and the first rotational speed, determining the second speed according to the first speed and the speed difference value, and determining the second rotational speed according to the first rotational speed and the rotational speed difference value — S204

Determining a transmission force of the transmission apparatus according to the corrected elastic coefficient and the deformation amount — S205

Controlling the controlled apparatus to move according to at least one of the deformation amount, the speed difference value, the rotational speed difference value, the second speed, the second rotational speed and the transmission force — S206

FIG. 2

FIG. 3

FIG. 4

FIG. 5

FIG. 6

FIG. 7

## INTERNATIONAL SEARCH REPORT

| International application No. |
| --- |
| **PCT/CN2023/097648** |

**A.    CLASSIFICATION OF SUBJECT MATTER**

F16H61/00(2006.01)i

According to International Patent Classification (IPC) or to both national classification and IPC

**B.    FIELDS SEARCHED**

Minimum documentation searched (classification system followed by classification symbols)

F16H,B60L,B60W,B60K,G05B

Documentation searched other than minimum documentation to the extent that such documents are included in the fields searched

Electronic data base consulted during the international search (name of data base and, where practicable, search terms used)

CNTXT; CNABS; WPABSC; ENTXTC; VEN; CNKI: 驱动, 受控, 电机, 发动机, 发电机, 传动, 弹性, 弹力, 系数, 参数, 变形, 形变, 速比, 效率, 传动力, 速度, 转速, 驱动力, 质量, 转动惯量, 损耗, drive, control, motor, engine, generator, transmission, elasticity, coefficient, parameter, deformation, speed ratio, efficiency, transmission force, speed, rotational speed, force, mass, moment of inertia, loss

**C.    DOCUMENTS CONSIDERED TO BE RELEVANT**

| Category* | Citation of document, with indication, where appropriate, of the relevant passages | Relevant to claim No. |
| --- | --- | --- |
| A | CN 115306893 A (NANJING SCAGE AUTO TECH CO., LTD.) 08 November 2022 (2022-11-08)<br>    description, paragraphs 0019-0029 | 1-12 |
| A | CN 111600526 A (FOSHAN JINHUAXIN INTELLIGENT TECHNOLOGY CO., LTD.) 28 August 2020 (2020-08-28)<br>    entire document | 1-12 |
| A | CN 113500991 A (DONGFENG COMMERCIAL VEHICLE CO., LTD.) 15 October 2021 (2021-10-15)<br>    entire document | 1-12 |
| A | CN 114706368 A (PLA ARMY ACADEMY OF ARMORED FORCES) 05 July 2022 (2022-07-05)<br>    entire document | 1-12 |

☑ Further documents are listed in the continuation of Box C.       ☑ See patent family annex.

|  |  |
| --- | --- |
| *      Special categories of cited documents:<br>"A"    document defining the general state of the art which is not considered to be of particular relevance<br>"D"    document cited by the applicant in the international application<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
| --- | --- |
| **27 February 2024** | **27 February 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/097648** |

**C.      DOCUMENTS CONSIDERED TO BE RELEVANT**

| Category* | Citation of document, with indication, where appropriate, of the relevant passages | Relevant to claim No. |
| --- | --- | --- |
| A | CN 115489605 A (SUZHOU AUTOMOTIVE RESEARCH INSTITUTE, TSINGHUA UNIVERSITY (XIANGCHENG)) 20 December 2022 (2022-12-20) <br>    entire document | 1-12 |
| A | JP 2017041210 A (NAGAOKA UNIVERSITY OF TECHNOLOGY; NABTESCO CORP.) 23 February 2017 (2017-02-23) <br>    entire document | 1-12 |
| A | WO 2010061639 A1 (TOYOTA MOTOR CORP.; AISIN AW CO., LTD. et al.) 03 June 2010 (2010-06-03) <br>    entire document | 1-12 |

Form PCT/ISA/210 (second sheet) (July 2022)

## INTERNATIONAL SEARCH REPORT
### Information on patent family members

| International application No. |
| --- |
| **PCT/CN2023/097648** |

| Patent document cited in search report | | | Publication date (day/month/year) | Patent family member(s) | | | Publication date (day/month/year) |
| --- | --- | --- | --- | --- | --- | --- | --- |
| CN | 115306893 | A | 08 November 2022 | None | | | |
| CN | 111600526 | A | 28 August 2020 | None | | | |
| CN | 113500991 | A | 15 October 2021 | None | | | |
| CN | 114706368 | A | 05 July 2022 | None | | | |
| CN | 115489605 | A | 20 December 2022 | None | | | |
| JP | 2017041210 | A | 23 February 2017 | JP | 6565034 | B2 | 28 August 2019 |
| WO | 2010061639 | A1 | 03 June 2010 | DE | 112009003597 | T5 | 17 October 2013 |
| | | | | DE | 112009003597 | B4 | 16 December 2021 |
| | | | | US | 2011231048 | A1 | 22 September 2011 |
| | | | | US | 8634978 | B2 | 21 January 2014 |
| | | | | JP | 2010127356 | A | 10 June 2010 |
| | | | | JP | 5210826 | B2 | 12 June 2013 |

Form PCT/ISA/210 (patent family annex) (July 2022)